# EUROPÄISCHE PATENTSCHRIFT

(11) **EP 3 904 984 B1**
(45) Veröffentlichungstag und Bekanntmachung des Hinweises auf die Patenterteilung: **01.03.2023**
(21) Anmeldenummer: 20171528.1
(22) Anmeldetag: 27.04.2020
(51) Int. Cl.: G05B 19/409, G05B 17/02, G06F 3/01, G06F 3/04847, G06F 3/03

(54) **VERFAHREN FÜR EINE IMMERSIVE MENSCH-MASCHINE-INTERAKTION**
METHOD FOR AN IMMERSIVE HUMAN MACHINE INTERACTION
PROCÉDÉ D'INTERACTION IMMERSIVE HOMME-MACHINE

(43) Veröffentlichungstag der Anmeldung: 03.11.2021
(73) Patentinhaber: Siemens Aktiengesellschaft, 80333 München (DE)
(72) Erfinder: Krüger, Daniel, 91126 Rednitzhembach (DE); Ködel, Tobias, 95448 Bayreuth (DE); Wohlgemuth, Wolfgang, 91058 Erlangen (DE)

(56) Entgegenhaltungen:
- EP-A2- 3 002 646
- DE-A1-102017 203 329

## Beschreibung

Die Erfindung betrifft ein Verfahren für eine immersive Mensch-Maschine-Interaktion mit einem virtuellen mechanischen Bedienmittel einer industriellen Automatisierungsanordnung in einer virtuellen Realität gemäß dem Oberbegriff des Patentanspruchs 1, und eine Anordnung für eine immersive Mensch-Maschine-Interaktion mit einem virtuellen mechanischen Bedienmittel einer industriellen Automatisierungsanordnung in einer virtuellen Realität gemäß dem Oberbegriff des Patentanspruchs 9.

Immersive Technologien wie Virtual und Augmented Reality (VR, AR) oder virtuelle Umgebungen wie CAVE (Cave Automatic Virtual Environment) gewinnen auch im industriellen Umfeld zunehmend an Bedeutung. Immersiv bedeutet dabei, dass die Virtuelle Realität weitgehend als real empfunden wird. Insbesondere die interaktive Visualisierung von Maschinen in einer virtuellen Realität, insbesondere die Benutzeroberfläche und die Bedienmittel der Maschinen bzw. der Maschinensteuerungen oder der dabei eingesetzten Bedien- und Beobachtungsgeräte ermöglicht vielversprechende Anwendungen.

Bei der virtuellen Inbetriebnahme werden Steuerungsprogramme und eine Parametrierung der Maschine bzw. der zugehörigen industriellen Automatisierungskomponenten (Speicherprogrammierbare Steuerungen, Bedien- und Beobachtungsgeräte und dgl.) vor dem Programmieren oder "Aufspielen" auf die reale Maschine in einer Simulationsumgebung getestet, um Fehler frühzeitig zu entdecken und mögliche Folgeschäden zu verhindern. Beim virtuellen Training erlernt das Bedienpersonal den Umgang mit einer Maschine anhand einer Maschinensimulation, um Trainings- und Ausfallzeiten der realen Maschine zu reduzieren. Virtuelle Nutzertests werden zur Optimierung der Gebrauchstauglichkeit (usability) von Maschinen bzw. industriellen Anordnungen eingesetzt.

In diesem Zusammenhang müssen Möglichkeiten gefunden werden, die Mensch-Maschine-Schnittstelle und damit die Interaktionen zwischen Mensch und Maschine möglichst realitätskonform innerhalb der immersiven Umgebung (z.B. Virtual Reality-Headset) zur Verfügung zu stellen. Insbesondere Trainingsanwendungen erfordern, dass der Nutzer innerhalb der virtuellen Realität dieselben Interaktionsmetaphern wie später an der realen Maschine vorfindet.

Die Druckschrift DE 10 2017 203329 A1 - Bischoff et al. "Verfahren und Simulationsvorrichtung zur Simulation zumindest eines Bauteils" offenbart die Simulation eines Bauteils, insbesondere eines medizinischen Gerätes, wobei vorgeschlagen wird, die Anzahl der Punkte eines Modells zum Zwecke der einfacheren Simulation zu reduzieren.

Die Publikation EP 3 002 646 A2 - Mansouri et al. "VIRTUAL DESIGN ENGINEERING" befasst sich mit der Modellierung einer Bewegung einer Maschine oder eines Maschinenteils anhand einer simulierten Steuerungsanweisung einer industriellen Steuerung.

In derzeit gebräuchlichen Systemen erfolgt die Simulation der Mensch-Maschine-Interaktion in der virtuellen Realität (VR, AR - Virtual Reality, Augmented Reality) zumeist über vordefinierte Interaktionsroutinen, beispielsweise Skripte. Diese sind vollständig in dem System, welches die virtuelle Realität erzeugt, definiert. Soll beispielsweise ein Druckknopf abgebildet werden, wird dessen kinematisches Verhalten (z.B. Verschiebbarkeit) fest im System für die virtuelle Realität programmiert und vom Nutzer über eine entsprechende Eingabe (z. B. Tastendruck auf einem virtual-reality-controller, also einer Art Fernbedienung) ausgelöst. Als Folge wird von dem System der virtuellen Realität ein Ereignis ausgelöst, das häufig unmittelbar mit einer technischen Funktion der Maschine oder eines Bedien- und Beobachtungsgerätes gekoppelt ist. Im genannten Beispiel wird also beispielsweise detektiert, dass ein Knopf betätigt wurde, und damit wird ein Vorschub eingeschaltet oder dgl. Hier wird also die logische Verschaltung der Mensch-Maschine-Schnittstelle mit der Maschinensteuerung auf Seiten des Virtual-Reality-Systems neu implementiert, das heißt, dass ein Aspekt der Maschinenkonstruktion zum Zweck der Visualisierung doppelt realisiert wird.

Da dieser zusätzliche Engineering-Aufwand häufig gescheut wird, sind die Interaktionsmöglichkeiten bei kommerziell realisierten industriellen Virtual-Reality-Systemen meist sehr eingeschränkt.

Die Integration dieser Skripte und der Definition der Interaktion zwischen einem Nutzer und dem Bedienmittel (z. B. Druckknopf) in dem System der virtuellen Realität hat zudem den Nachteil, dass bei einer Änderung der simulierten Einrichtungen und damit der realen Bedienmittel auch das System der virtuellen Realität jedes Mal angepasst werden muss.

Es ist daher eine Aufgabe der vorliegenden Erfindung, eine Anordnung und ein Verfahren zur realitätskonformen Simulation der Mensch-Maschine-Interaktion in immersiven Umgebungen vorzuschlagen, wobei zum einen der Engineering-Aufwand reduziert werden soll, und wobei zum anderen mechanische Bedienmittel möglichst realitätskonform in der virtuellen Realität bedienbar sein sollen.

Es ist eine Kernidee der erfindungsgemäßen Lösung der vorliegenden Aufgabe, dass eine strikte Trennung der Maschinensimulation und der Maschinenvisualisierung, also des Virtual-Reality-Systems, eingehalten wird, wobei eine generische Behandlung mechanischer Bedienelemente durch eine physikalische Vermittlung bzw. Simulation der Interaktion stattfindet, und wobei ggf. eine Integration der Bildschirmausgabe von Bedien- und Beobachtungssystemen (HMI-Systeme; HMI = Human Machine Interface) in die Maschinenvisualisierung erfolgt.

Die Aufgabe wird insbesondere durch das Verfahren gemäß dem Patentanspruch 1 und durch die Anordnung gemäß dem Patentanspruch 9 gelöst.

Dabei ist ein Verfahren für eine immersive Mensch-Maschine-Interaktion mit einem virtuellen mechanischen Bedienmittel einer industriellen Automatisierungsanordnung in einer virtuellen Realität vorgesehen, wobei durch die Interaktion mit dem Bedienmittel eine Eingabeinformation an eine Komponente der industriellen Automatisierungsanordnung übermittelt wird. Dabei wird in einem ersten Schritt das mechanische Bedienmittel in einer Simulationseinrichtung für eine Starrkörpersimulation modelliert, wobei in einem zweiten Schritt das mechanische Bedienmittel in der virtuellen Realität abgebildet wird, wobei in einem dritten Schritt durch die virtuelle Realität eine Interaktion mit dem dargestellten Bedienmittel detektiert wird, wobei aus ersten Parametern der detektierten virtuellen Interaktion zweite Parameter über eine simulierte physische Einwirkung auf das Bedienmittel errechnet werden, wobei in einem vierten Schritt die zweiten Parameter zu der Simulationseinrichtung übertragen werden, wobei in einem fünften Schritt durch die Simulationseinrichtung die zweiten Parameter mittels des modellierten Bedienmittels zur Simulation einer Bewegung zumindest eines Teils des Bedienmittels verwendet werden, wobei entschieden wird, ob durch die simulierte Bewegung eine Schaltzustandsänderung des Bedienmittels gegeben ist, und wobei in einem sechsten Schritt der Schaltzustand oder die Schaltzustandsänderung als die Eingabeinformation an die Komponente gemeldet wird. Durch dieses Verfahren ist eine strikte Trennung von Maschinensimulation und Maschinenvisualisierung gewährleistet. Dies führt zu gesteigerter Flexibilität bezüglich der Nutzung verschiedener immersiver Umgebungen (VR-Headset, CAVE, Tablet, AR-Headset), zu einer besseren Verteilung der Rechenlast auf mehrere Knoten und zu einer verbesserten Datenkonsistenz, weil das Maschinenverhalten durchgängig in Konstruktionssystemen beschrieben wird, wobei das Maschinen-Know-How in der Simulationsumgebung verbleibt, d.h. im Engineering-System. Durch diese Trennung lassen sich interaktive Optimierungen an Zugänglichkeit und "Usability" der Maschine leichter in der virtuellen Realität vornehmen.

Die Aufgabe wird außerdem durch eine Anordnung für eine immersive Mensch-Maschine-Interaktion mit einem virtuellen mechanischen Bedienmittel einer industriellen Automatisierungsanordnung in einer virtuellen Realität gelöst, wobei die Anordnung zur Übermittlung einer Eingabeinformation an eine Komponente der industriellen Automatisierungsanordnung infolge der Interaktion mit dem Bedienmittel eingerichtet ist, mit einem System zur Erzeugung und zur Visualisierung der virtuellen Realität, und wobei das mechanische Bedienmittel in der virtuellen Realität abgebildet ist. Dabei ist eine Simulationseinrichtung für eine Starrkörpersimulation des mechanischen Bedienmittels vorgesehen, wobei die virtuelle Realität zur Detektierung einer Interaktion mit dem dargestellten Bedienmittel eingerichtet ist, wobei vorgesehen ist, aus ersten Parametern der detektierten virtuellen Interaktion zweite Parameter über eine simulierte physische Einwirkung auf das Bedienmittel zu errechnen, wobei die virtuelle Realität zur Übertragung der zweiten Parameter zu der Simulationseinrichtung eingerichtet ist, wobei die Simulationseinrichtung zur Simulation einer Bewegung zumindest eines Teils des Bedienmittels mittels des modellierten Bedienmittels anhand der zweiten Parameter eingerichtet ist, wobei die Simulationseinrichtung zum Treffen einer Entscheidung darüber ausgestaltet ist, ob durch die simulierte Bewegung eine Schaltzustandsänderung des Bedienmittels gegeben ist, und wobei die Simulationseinrichtung zur Meldung der Schaltzustandsänderung oder des Schaltzustandes als die Eingabeinformation an die Komponente eingerichtet ist. Mit dieser Anordnung können die Vorteile realisiert werden, die bereits anhand des Verfahrens erläutert wurden.

Vorteilhafte Ausgestaltungen der Erfindung sind in den abhängigen Patentansprüchen definiert. Dabei gelten die vorteilhaften Ausgestaltungen und deren Vorteile des erfindungsgemäßen Verfahrens auch sinngemäß für die erfindungsgemäße Anordnung, und umgekehrt. Vorteilhafte Varianten können sowohl einzeln, also auch in sinnfälliger Kombination miteinander realisiert sein.

In der Simulation wird vorteilhaft als der zumindest eine Teil des Bedienmittels ein simulierter massebehafteter Körper verwendet, insbesondere ein Hebel oder eine Taste oder ein Schalter oder ein anderes bewegliches Element. Im Gegensatz zu nicht-massebehafteten Körpern von Bedienmitteln, von Softkeys auf Benutzeroberflächen, Sensortasten, Lichtschranken oder dgl. ist damit das Bedienverhalten vieler realer Bedienmittel besser nachbildbar. Insbesondere werden damit Fehlbedienungen verringert, die infolge von zufälligen "Berührungen" geschehen können. Während im Stand der Technik es zum Abbilden von solchen Tasten etc. notwendig ist, dass eine Person ein reales Bedienmittel in die Hand nimmt, einen sogenannten Virtual Reality Controller nach Art eines Controllers für Spielekonsolen oder dgl., kann durch die Simulation eines massebehafteten Körpers die Kinetik einer mechanischen Lösung wirklichkeitsgetreu abgebildet werden. Dabei wird als die zweiten Parameter zumindest eine Kraft oder ein Kraft-Drehmoment-Paar oder ein anderes kinetisches Interaktionsdyname auf den simulierten massebehafteten Körper angewendet. Die virtuelle Bedienhandlung kann der realen Bedienhandlung weiter angenähert werden, indem als die ersten Parameter erste Werte für eine Richtung und eine Durchdringung einer virtuellen Hand oder eines virtuellen Fingers oder eines anderen Körperteils mit dem abgebildeten Bedienmittel durch die virtuelle Realität ermittelt werden, wobei anschließend zur Errechnung der simulierten Wirkung auf den simulierten massebehafteten Körper die zweiten Parameter aus diesen ersten Werten berechnet werden.

Sofern die industrielle Automatisierungsanordnung ein Gerät mit einer Bildschirmausgabe umfasst, wird die Geometrie dieses Gerätes auch in der virtuellen Realität abgebildet. Dabei wird die Bildschirmausgabe in der Simulationsumgebung der industriellen Automatisierungsanordnung, insbesondere durch eine Simulation eines Bedien- und Beobachtungsgerätes (HMI-Emulation), erzeugt und an die virtuelle Realität übermittelt, beispielsweise in Form einer Bilddatei, Streams o.ä. ("Pixelbuffer") für eine fertige Video-Textur, und dort in der dargestellten Gehäusegeometrie bzw. der dargestellten Bildschirmoberfläche eines virtuell dargestellten Bedien- und Beobachtungsgerätes dargestellt. Dies bedeutet, dass eine realitätsgetreue Simulation eines Bedien- und Beobachtungsgerätes oder sogar ein reales Bedien- und Beobachtungsgerät mit seinem originalen Programmcode die Bildschirmausgabe erzeugen kann, so dass innerhalb der virtuellen Realität nur ein Gehäuse, beispielsweise ein Panel oder eine andere industrielle Bedienstation, nachgebildet werden muss, und die virtuelle Realität von außen den Bildschirminhalt als Bild beziehen und auf dem dargestellten Gehäuse ausgeben kann. Somit wird in dieser vorteilhaften Variante die virtuelle Realität nicht für die Erzeugung der Bildschirmausgabe bzw. deren Inhalt eingesetzt; diese kann vielmehr von einem spezialisierten Simulationssystem oder sogar von einer realen Einheit bezogen werden. Somit kann das Gerät mit der Bildschirmausgabe entweder ein reales oder ein simuliertes Bedien- und Beobachtungsgerät sein, wobei Eingaben aus der virtuellen Realität und/oder die aus der kinetischen Starrkörpersimulation erzeugten Eingabeparameter und/oder Zustandsinformationen eines simulierten industriellen Prozesses für das echte oder simulierte Bedien- und Beobachtungsgerät verwendet werden, wobei Ausgaben des echten oder des simulierten Bedien- und Beobachtungsgerätes an die virtuelle Realität übermittelt und dort mit oder in einem Abbild der Bedien- und Beobachtungsstation dargestellt werden. Sofern ein echtes Bedien- und Beobachtungsgerät in die Simulation der industriellen Automatisierungsanordnung eingebunden ist, spricht man auch von einer Hardware-in-the-loop-Integration. Dies bedeutet, dass ein reales System mit einem Simulationssystem verknüpft ist, was sich insbesondere bei solchen Systemen anbietet, die kaum Mechanik umfassen, wie das bei den Rechnern für Bedien- und Beobachtungsaufgaben regelmäßig der Fall ist.

In einer vorteilhaften Variante kann als die Komponente eine virtuelle (emulierte oder simulierte) speicherprogrammierbare Steuerung verwendet werden, wobei die virtuelle speicherprogrammierbare Steuerung ein für eine reale Automatisierungsanordnung bestimmtes Automatisierungsprogramm abarbeitet, und wobei bei der Abarbeitung des Programms in der virtuellen speicherprogrammierbaren Steuerung festgestellte Veränderungserfordernisse zur Korrektur des Automatisierungsprogramms verwendet werden und wobei das veränderte Automatisierungsprogramm in der realen Automatisierungsanordnung eingesetzt wird. Somit können die Erfahrungen, die durch die Bedienung des simulierten Systems mittels der virtuellen Realität heraus gemacht werden, zu einer Verbesserung des Automatisierungsprogramms führen, so dass eine damit betriebene reale Automatisierungsanordnung optimiert wird.

In einer vorteilhaften Variante ist dabei an der virtuellen speicherprogrammierbaren Steuerung eine Simulationseinrichtung für einen industriellen Prozess oder eine industrielle Fertigung angeschlossen, wobei die virtuelle speicherprogrammierbare Steuerung mittels eines bidirektionalen Datenaustauschs einen damit simulierten industriellen Prozess oder eine damit simulierte industrielle Fertigung steuert und/oder kontrolliert.

In einer vorteilhaften Ausgestaltung werden durch die Simulationseinrichtung für die Starrkörpersimulation die zweiten Parameter oder dritte Parameter über die simulierte Bewegung an die virtuelle Realität übertragen, womit eine Darstellung des Bedienmittels anhand der übermittelten Parameter angepasst wird. Damit ist es möglich, die Bewegung eines Bedienmittels, beispielsweise eines Drucktasters, eines Hebels oder eines Schalters, in der virtuellen Realität realitätsnah darzustellen. Der Vorteil besteht darin, dass ein Nutzer durch seine Bedienhandlung an dem Bedienmittel ein unmittelbares visuelles und ggf. sogar akustisches Feedback erfährt. Dies ist insbesondere bei solchen Anlagen von Vorteil, die für Trainingszwecke aufgebaut sind, weil damit ein komplexes Bedienmuster vollständig und realistisch ("immersiv") trainiert werden kann.

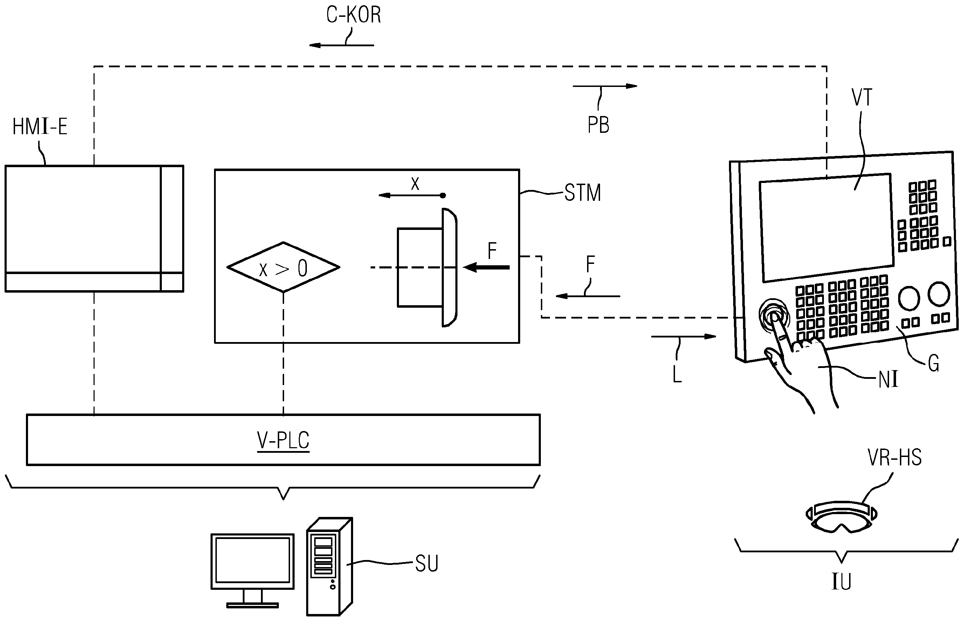

Ein Ausführungsbeispiel für das erfindungsgemäße Verfahren wird nachfolgend anhand der Zeichnung erläutert. Das Ausführungsbeispiel dient gleichzeitig der Erläuterung einer erfindungsgemäßen Anordnung.

Dabei zeigt die einzige Figur in schematischer Darstellung eine virtuelle Realität mit einem dargestellten industriellen Bedien-Panel mit einem virtuellen mechanischen oder elektromechanischen Bedienmittel und eine Simulationsumgebung mit einer Starrkörpersimulation, einer virtuellen Steuerung und einer Emulation eines Bedien- und Beobachtungsgerätes.

In der Figur ist linksseitig eine Simulationsumgebung SU dargestellt, die im vorliegenden Beispiel aus einer Simulationseinrichtung für eine Starrkörpersimulation STM, eine Emulation eines Bedien- und Beobachtungsgerätes HMI-E (HMI-Emulation; HMI = Human Machine Interface) und eine simulierte speicherprogrammierbare Steuerung V-PLC (Virtual Programmable Logic Controller) umfasst. Die drei genannten Einheiten können, wie dargestellt, als einzelne Prozesse auf einer gemeinsamen Hardware-Plattform ablaufen, es können jedoch auch vollständig getrennte Systeme sein, die mittels eines Datennetzwerks kommunizieren. Insbesondere ist es auch möglich, einzelne oder alle gezeigten Simulationseinrichtungen in einer Datenwolke ("Cloud") zu realisieren. Darüber hinaus ist es auch möglich, insbesondere die virtuelle speicherprogrammierbare Steuerung V-PLC und/oder die Emulation des Bedien- und Beobachtungsgerätes HMI-E durch nicht-simulierte speicherprogrammierbare Steuerungen bzw. Bedien- und Beobachtungsgeräte zu ersetzen; man spricht dann von einer Hardware-in-the-loop-Anordnung.

Auf der rechten Seite der Figur ist eine immersive Umgebung IU dargestellt, also eine Umgebung, in der ein Benutzer realitätsgetreue virtuelle Erfahrungen tätigen kann, insbesondere die Bedienung von Komponenten einer industriellen Automatisierungsanordnung erleben kann. Im vorliegenden Beispiel besteht die immersive Umgebung IU aus einem (nicht dargestellten) speziellen Computersystem zur Erzeugung einer virtuellen Realität, einer Datenbrille VR-HS (Virtual Reality Headset), nicht dargestellten Mitteln zur Bewegungserfassung einer Hand oder weiterer Körperteile und einem hier nicht dargestellten Bewegungsraum. Das Computersystem zur Erzeugung der immersiven Umgebung IU ist dabei separat von der Simulationsumgebung SU aufgebaut; es existieren lediglich Datenverbindungen zwischen den beiden Systemen.

Die schematische Darstellung ist auf das Wesentliche reduziert. Insbesondere weist die virtuelle speicherprogrammierbare Steuerung V-PLC in der Regel eine Datenverbindung zu einem weiteren Simulationssystem für einen zu steuernden zu kontrollierenden industriellen Prozess oder eine industriellen Fertigung auf. Dabei ist die Simulationsumgebung SU derart ausgestaltet, dass eine industrielle Automatisierungsanordnung funktional hinreichend vollständig nachgebildet ist und ein Betrieb der industriellen Automatisierungsanordnung in einer Simulation durchgeführt werden kann.

Zur Darstellung der industriellen Automatisierungsanordnung in der virtuellen Realität (immersive Umgebung IU) wird angenommen, dass die meisten Elemente der Automatisierungswelt bereits im Sinne eines digitalen Zwillings (digital twin) konstruktionsbegleitend als Simulationsmodell für eine Simulationsumgebung SU existieren, womit alle technologisch relevanten Aspekte der Maschinen oder Elemente durch entsprechende Simulatoren abgebildet werden können. Dies betrifft die Geometrie, also die geometrische Beschreibung einer Maschine beispielsweise in Form von Daten, wozu auch die Bediengeräte (Panels, Schalter, etc.) gehören, dazu gehört eine Mehrkörpersimulation für Starrkörpermechanik, wobei die Simulation der Bewegung sämtlicher mechanischer Komponenten der Maschine unter Wirkung von eingeprägten Kräften möglich ist; dies umfasst auch die Kinetik von mechanischen Bedienelementen wie Drucktasten oder Stellrädern. Weiter wird angenommen, dass mit der Simulation für das Bedien- und Beobachtungsgerät HMI-E die graphische Benutzeroberfläche des Bediensystems simuliert und damit erzeugt werden kann. Die virtuelle speicherprogrammierbare Steuerung V-PLC simuliert das Ablaufverhalten sämtlicher Steuerungsprogramme einer Maschine oder Anordnung. Sie kommuniziert daher auch mit der Mehrkörpersimulation, insbesondere der Starrkörpersimulation STN, dem emulierten Bedien- und Beobachtungsgerät HMI-E und der (nicht dargestellten) Simulation für den industriellen Prozess oder die industrielle Fertigung.

Die immersive Umgebung IU ist für die graphische Darstellung (rendering) des Maschinenmodells und die Verarbeitung von allgemeinen Nutzereingaben NI (Nutzerinteraktion), Tracking von Hand- und Kopfposition (insbesondere als Cursorkoordinaten C-KOR) und der Darstellung von Feedback (insbesondere geänderte Lage L eines dargestellten Bedienmittels) zuständig, während alle Aspekte des Betriebsverhaltens einer Maschine inklusive der Mensch-Maschine-Schnittstelle und damit der Darstellung eines Bedien- und Beobachtungsgerätes innerhalb der Simulationsumgebung SU abgebildet werden. Zur Visualisierung wird die geometrische Beschreibung der Maschine (Geometrie G) in reduzierter Form an die immersive Umgebung IU übertragen und dort dargestellt, im vorliegenden Ausführungsbeispiel als Gehäuse eines Bedien-Panels.

Hinsichtlich der Mensch-Maschine-Interaktion werden mechanische Bedienelemente (Hebel, Tasten, Drehknöpfe) von virtuellen Bedienelementen (z.B. Softkeys auf einem Bedienbildschirm) und Anzeigen und dgl. unterschieden.

Im Folgenden soll exemplarisch eine Mensch-Maschine-Interaktion, also eine Nutzerinteraktion NI, eines in der immersiven Umgebung IU erfassten Fingers eines Nutzers mit einem Bedienmittel erläutert werden. Das Bedienmittel ist exemplarisch ein Drucktaster, beispielsweise ein Not-Aus-Taster, der auf der Geometrie G eines in der immersiven Umgebung IU dargestellten Bedien-Panels links unten kreisförmig dargestellt ist.

Sobald die immersive Umgebung IU eine Kollision bzw. Durchdringung des Fingers des Nutzers mit dem dargestellten Bedienmittel feststellt, werden erste Parameter der detektierten virtuellen Interaktion festgestellt. Dies kann beispielsweise die Richtung und die "Tiefe" der Durchdringung sein. Aus diesen ersten Parametern werden zweite Parameter über die simulierte physische Einwirkung auf das Bedienmittel errechnet. Dies bedeutet, dass aus der Bewegung der Interaktion NI beispielsweise eine Kraft F bestimmt wird. Dies kann beispielsweise geschehen, indem durch den virtuellen Bedienweg, also die Durchdringung des Bedienmittels mit dem Finger, eine proportionale Kraft F bestimmt wird. Es kann aber auch eine Kinetik angenommen werden, so dass eine Geschwindigkeit des Betätigungsvorgangs proportional in die Kraft F oder einen (hier nicht verwendeten) angenommenen Impuls oder dgl. eingerechnet wird.

Eine Identifikation des Bedienmittels und die zweiten Parameter (hier exemplarisch: Kraft F) werden dann von der immersiven Umgebung IU, also dem spezialisierten Computersystem für die virtuelle Realität, an die Simulationsumgebung SU und darin speziell an die Simulationseinrichtung für eine Starrkörpersimulation STM übermittelt.

Mechanische Bedienelemente oder Bedienmittel treten in der Starrkörpersimulation STM als massebehaftete Körper auf, die durch das Aufbringen von Kräften und Drehmomenten im Rahmen ihrer kinematischen Freiheitsgrade (Rotation, Translation) bewegt werden können. Die Schaltlogik des hier betrachteten Bedienmittels, also der Drucktaste, kann somit in Abhängigkeit der aktuellen Lage des Tastkörpers ausgedrückt werden. Dazu ist das mechanische Bedienmittel für die Simulationseinrichtung STM datentechnisch modelliert, beispielsweise als simulationsfähiger digitaler Zwilling, als Gleichungssystem, als Simulationsobjekt oder dgl. In der Starrkörpersimulation STM wird nun das Bedienmittel bzw. ein beweglicher Teil desselben mit den zweiten Parametern konfrontiert, d.h., dass die aus dem Bedienvorgang ermittelte Kraft F oder ein Impuls oder dgl. auf den massebehafteten, simulierten Körper des Bedienmittels und einer etwaigen damit verbundenen Feder, Rastelementen oder dgl. angewendet wird.

Die Starrkörpersimulation STM errechnet daraus resultierend eine Bewegung des Bedienmittels, im hier gezeigten Fall des Drucktasters, also eine Bewegung des Tastenkopfes, was durch die Koordinate X in der Figur dargestellt ist. Sofern die dabei errechnete Bewegung (Koordinate X) einen Schwellwert überschreitet (hier: X>0), wird entschieden, dass das Bedienmittel seinen Zustand geändert hat, was konkret bedeutet, dass der Schalter ausgelöst hat oder ein "Not-Aus" gedrückt worden ist. Diese Schaltzustandsänderung oder allgemein der gerade gültige Schaltzustand des Bedienmittels wird exemplarisch an die virtuelle speicherprogrammierbare Steuerung V-PLC übertragen und dort an einem (virtuellen) Eingang signalisiert.

In der virtuellen speicherprogrammierbaren Steuerung V-PLC kann ein Automatisierungsprogramm ablaufen, welches beispielsweise eine Fertigungsstation steuert. Sobald die Schaltzustandsänderung an dieser Steuerung V-PLC signalisiert wird, reagiert nun das Automatisierungsprogramm entsprechend, indem beispielsweise ein Not-Aus umgesetzt wird. Eine entsprechende Information über den neuen Zustand "Not-Aus" des Automatisierungsprogramms wird auch an das emulierte Bedien- und Beobachtungsgerät HMI-E übertragen. Dies führt zu einer geänderten Bildschirmausgabe des Bedien- und Beobachtungsgerätes HMI-E, wo beispielsweise auf dem Bildschirm jetzt ein rotes Stopp-Signal ausgegeben wird oder dgl. Die geänderte Bildschirmausgabe wird zu geänderten Bilddaten bzw. geänderten Teil-Bilddaten verarbeitet. Diese Bilddaten sollen im folgenden Pixelbuffer PB genannt werden. Der Pixelbuffer PB wird an die immersive Umgebung IU übermittelt und dort als Videotextur VT auf einem Bildschirmbereich der dargestellten Geometrie G so dargestellt, dass sich für einen Nutzer der immersiven Umgebung IU der Eindruck ergibt, als wäre er mit einem tatsächlichen Bedienpanel mit der Geometrie G und dem Bildschirminhalt des Pixelbuffers PB konfrontiert. Zur Verarbeitung weiterer Eingaben an dem dargestellten Bedien-Panel können Cursorkoordinaten C-KOR und entsprechende registrierte Eingaben, beispielsweise Berührungen auf einem virtuellen berührungsempfindlichen Bildschirm (Touchscreen), an das emulierte Bedien- und Beobachtungsgerät HMI-E übermittelt werden.

Die virtuelle speicherprogrammierbare Steuerung V-PLC kann weiterhin an eine (nicht dargestellte) Simulation eines industriellen Prozesses gemäß dem hier gewählten Beispiel die Information weitergeben, dass der simulierte industrielle Prozess gestoppt wird. Sofern dies in der Simulation nicht ordnungsgemäß geschieht, liegt möglicherweise ein Fehler in dem Automatisierungsprogramm, welches durch die virtuelle speicherprogrammierbare Steuerung V-PLC abgearbeitet wird, vor. Dieses kann dann so lange optimiert werden, bis eine ordnungsgemäße Funktion vorliegt. Das somit optimierte Automatisierungsprogramm kann dann in einer realen Automatisierungsanordnung zur Korrektur eingesetzt werden.

Durch die Starrkörpersimulation STM kann die Schaltlogik der Drucktaste also in Abhängigkeit der aktuellen Lage des Tastenkörpers ausgedrückt und der virtuellen speicherprogrammierbaren Steuerung V-PLC beispielsweise als Boole'sches Signal (oder alternativ als ein zur Auslenkung X proportionales analoges oder numerisches Signal) zugeführt werden. Von außen betrachtet wird die Maschinenfunktion also durch das Aufbringen einer Druckkraft auf den Tastenkörper ausgelöst, was exakt der realen Erwartungshaltung eines Nutzers entspricht. Auf Seiten der immersiven Umgebung IU genügt es also, ein Kraft-Drehmomentpaar (Dyname) zu bestimmen, welches an die Simulationsumgebung SU und konkret an die Starrkörpersimulation STM gesendet und dort auf den entsprechend nachgebildeten Starrkörper aufgebracht wird. Die daraus resultierende Lageänderung des Bedienelements wird später zur Visualisierung an die immersive Umgebung IU zurückkommuniziert. Das bedeutet, dass das dargestellte Bedienmittel entsprechend dann auch in der Darstellung seine Lage ändert, um dem Nutzer ein entsprechendes Feedback zu geben. Bestimmen lässt sich diese Interaktionsdyname aus den "getrackten" Handbewegungen des Nutzers unter Berücksichtigung der Nähe zur geometrischen Repräsentation des Bedienelements im Sinne einer Kollisionsanalyse.

Virtuelle Bedienelemente (z.B. GUI-Widgets, Sensortasten, virtuelle Tasten etc.) sind Bestandteil des Bedienbildschirms der dargestellten Geometrie und werden innerhalb der Simulationsumgebung SU durch die Emulation des Bedien- und Beobachtungsgerätes HMI-E behandelt. Generell konsumiert diese Emulation HMI-E diese Eingabe-Ereignisse von einem Zeigegerät (Cursorkoordinaten C-KOR, Tastendrücke einer Maus, Touch-Eingaben etc.) und rendert die Bildschirmausgabe in einen Pixelbuffer PB, welcher an einer realen Maschine auf einem Display (HMI-Panel) in Form einer Bildschirmausgabe (Videotextur) angezeigt würde. Um dieses Verhalten auf Seiten der immersiven Umgebung IU zu realisieren, wird der Pixelbuffer PB bedarfsgesteuert aus der Simulationsumgebung SU an die immersive Umgebung IU übertragen und dort in Form einer Videotextur VT in die Darstellung der Maschinengeometrie (Geometrie G) integriert. Im Gegenzug werden die zur Interaktion nötigen Eingabeereignisse (Cursorkoordinaten C-KOR, Tastendrücke) ebenfalls aus den Körperbewegungen des Nutzers und/oder passenden Interaktionsmöglichkeiten der Virtual-Reality-Hardware (z.B. Controller) generiert und über das Netzwerk an die Simulationsumgebung SU übertragen.

Die strikte Trennung von Maschinensimulation und Maschinenvisualisierung ergibt eine erhöhte Flexibilität bezüglich verschiedener immersiver Umgebungen (VR-Headset, CAVE, Tablet, AR-Headset). Weiter ist es möglich, die Rechenlast auf mehrere Knoten zu verteilen. Die Datenkonsistenz wird verbessert, weil das Maschinenverhalten durchgängig in einem Konstruktionssystem beschrieben wird, wobei das Know-How in der Simulationsumgebung verbleibt, konkret im zugrunde liegenden Engeneering-System, mit dem die Software und die Hardware der simulierten industriellen Automatisierungsanordnung geplant wurde.

Die physikalische Vermittlung der Mensch-Maschine-Interaktion durch Kräfte/Drehmomente (Interaktionsdyname) ermöglicht eine sehr generische Behandlung von mechanischen Bedienelementen. Insbesondere müssen auf Seiten der immersiven Umgebung keine Informationen über funktionale Aspekte der Maschinenkonstruktion vorliegen, die ggf. manuell modelliert werden müssten. Je nachdem, welcher Anspruch an die Genauigkeit der Physiksimulation gestellt wird, verhalten sich die Bedienelemente zudem exakt so, wie in der Realität, wovon Trainingsanwendungen profitieren. Durch die Einbettung der HMI-Emulation in die dreidimensional visualisierte Maschinengeometrie (Videotextur) lassen sich zudem gesamte HMI-Systeme realitätskonform abbilden, wobei auch hier der Anspruch besteht, keine Informationen über die innere Logik des Bediensystems in die immersive Umgebung zu transportieren.

## Patentansprüche

1. Verfahren für eine immersive Mensch-Maschine-Interaktion (NI) mit einem virtuellen mechanischen Bedienmittel einer industriellen Automatisierungsanordnung in einer virtuellen Realität (IU),
wobei durch die Interaktion mit dem Bedienmittel eine Eingabeinformation an eine Komponente (V-PLC) der industriellen Automatisierungsanordnung übermittelt wird, **dadurch gekennzeichnet,**
**dass** in einem ersten Schritt das mechanische Bedienmittel in einer Simulationseinrichtung (STM) für eine Starrkörpersimulation modelliert wird,
**dass** in einem zweiten Schritt das mechanische Bedienmittel in der virtuellen Realität (IU) abgebildet wird, dass in einem dritten Schritt durch die virtuelle Realität (IU) eine Interaktion mit dem dargestellten Bedienmittel detektiert wird, wobei aus ersten Parametern der detektierten virtuellen Interaktion zweite Parameter (F) über eine simulierte physische Einwirkung auf das Bedienmittel errechnet werden,
**dass** in einem vierten Schritt die zweiten Parameter zu der Simulationseinrichtung (STM) übertragen werden, dass in einem fünften Schritt durch die Simulationseinrichtung (STM) die zweiten Parameter (F) mittels des modellierten Bedienmittels zur Simulation einer Bewegung (X) zumindest eines Teils des Bedienmittels verwendet werden, wobei entschieden wird, ob durch die simulierte Bewegung (X) eine Schaltzustandsänderung des Bedienmittels gegeben ist, und
**dass** in einem sechsten Schritt der Schaltzustand oder die Schaltzustandsänderung als die Eingabeinformation an die Komponente (V-PLC) gemeldet wird.

2. Verfahren nach Patentanspruch 1,
**dadurch gekennzeichnet, dass**
in der Simulation als der zumindest eine Teil des Bedienmittels ein simulierter massebehafteter Körper verwendet wird, insbesondere ein Hebel oder eine Taste oder ein Schalter oder ein anderes bewegliches Element, wobei als zweite Parameter (F) zumindest eine Kraft oder ein Kraft-Drehmoment-Paar einer physikalischen Vermittlung der Mensch-Maschine-Interaktion auf den simulierten massebehafteten Körper angewendet wird.

3. Verfahren nach einem der vorhergehenden Patentansprüche,
**dadurch gekennzeichnet,**
**dass** als die ersten Parameter erste Werte für eine Richtung und eine Durchdringung einer Hand oder eines Fingers mit dem abgebildeten Bedienmittel durch die virtuelle Realität (IU) ermittelt und zur Errechnung der zweiten Parameter (F) verwendet werden.

4. Verfahren nach einem der vorhergehenden Patentansprüche,
**dadurch gekennzeichnet,**
**dass** die industrielle Automatisierungsanordnung ein Gerät mit einer Bildschirmausgabe (PB) umfasst, wobei die Bildschirmausgabe an die virtuelle Realität (IU) übermittelt und in dieser dargestellt wird.

5. Verfahren nach Patentanspruch 4,
**dadurch gekennzeichnet,**
**dass** das Gerät ein simuliertes Bedien- und Beobachtungsgerät (HMI-E) ist, wobei Eingaben aus der virtuellen Realität (IU) und/oder die im sechsten Schritt übertragenen Eingabeparameter für das simulierte Bedien- und Beobachtungsgerät (HMI-E) verwendet werden, und wobei Ausgaben des simulierten Bedien- und Beobachtungsgerätes (HMI-E) an die virtuelle Realität (IU) übermittelt und dort mit einem Abbild einer Bedien- und Beobachtungsstation (G) dargestellt werden.

6. Verfahren nach einem der vorhergehenden Patentansprüche,
**dadurch gekennzeichnet,**
**dass** als die Komponente (V-PLC) eine virtuelle speicherprogrammierbare Steuerung (V-PLC) verwendet wird, wobei die virtuelle speicherprogrammierbare Steuerung (V-PLC) ein für eine reale Automatisierungsanordnung bestimmtes Automatisierungsprogramm abarbeitet, und wobei bei der Abarbeitung des Automatisierungsprogramms in der virtuellen speicherprogrammierbaren Steuerung (V-PLC) festgestellte Fehler entdeckt und zur Korrektur des Automatisierungsprogramms verwendet werden, und wobei das veränderte Automatisierungsprogramm in der realen Automatisierungsanordnung eingesetzt wird.

7. Verfahren nach Patentanspruch 6,
**dadurch gekennzeichnet,**
**dass** an der virtuellen speicherprogrammierbaren Steuerung (V-PLC) eine Prozess-Simulationseinrichtung für einen industriellen Prozess angeschlossen wird, wobei die virtuelle speicherprogrammierbare Steuerung (V-PLC) mittels eines bidirektionalen Datenaustauschs mit der Prozess-Simulationseinrichtung einen damit simulierten industriellen Prozess steuert und/oder kontrolliert.

8. Verfahren nach einem der vorhergehenden Patentansprüche,
**dadurch gekennzeichnet,**
**dass** durch die Simulationseinrichtung (STM) die zweiten Parameter (F) oder die simulierte Bewegung (X) betreffende dritte Parameter an die virtuelle Realität (IU) übermittelt werden, wonach durch die virtuelle Realität eine Darstellung des Bedienmittels anhand der übermittelten Parameter angepasst wird.

9. Anordnung für eine immersive Mensch-Maschine-Interaktion (NI) mit einem virtuellen mechanischen Bedienmittel einer industriellen Automatisierungsanordnung in einer virtuellen Realität (IU), wobei die Anordnung zur Übermittlung einer Eingabeinformation an eine Komponente (V-PLC) der industriellen Automatisierungsanordnung infolge der Interaktion (NI) mit dem Bedienmittel eingerichtet ist,
mit einem System zur Erzeugung und zur Visualisierung der virtuellen Realität (IU), und
wobei das mechanische Bedienmittel in der virtuellen Realität (IU) abgebildet ist,
**dadurch gekennzeichnet,**
**dass** eine Simulationseinrichtung (STM) für eine Starrkörpersimulation des mechanischen Bedienmittels vorgesehen ist,
**dass** die virtuelle Realität (IU) zum Detektieren der Interaktion (NI) mit dem dargestellten Bedienmittel eingerichtet ist, wobei vorgesehen ist, aus ersten Parametern der detektierten virtuellen Interaktion zweite Parameter (F) über eine simulierte physische Einwirkung auf das Bedienmittel zu errechnen,
**dass** die virtuelle Realität (IU) zur Übertragung der zweiten Parameter (F) zu der Simulationseinrichtung (STM) eingerichtet ist,
**dass** die Simulationseinrichtung (STM) zur Simulation einer Bewegung (X) zumindest eines Teils des Bedienmittels mittels des modellierten Bedienmittels anhand der zweiten Parameter (F) eingerichtet ist, wobei die Simulationseinrichtung (STM) zum Treffen einer Entscheidung darüber ausgestaltet ist, ob durch die simulierte Bewegung (X) eine Schaltzustandsänderung des Bedienmittels gegeben ist, und
**dass** die Simulationseinrichtung (STM) zur Meldung der Schaltzustandsänderung oder des Schaltzustandes als die Eingabeinformation an die Komponente (V-PLC) eingerichtet ist.

10. Anordnung nach Patentanspruch 9,
**dadurch gekennzeichnet, dass**
in der Simulationseinrichtung (STM) das mechanische Bedienmittel einen simulierten massebehafteten Körper aufweist, insbesondere einen Hebel oder eine Taste oder einen Schalter, wobei die Simulationseinrichtung (STM) dazu eingerichtet ist, als zweite Parameter (F) zumindest eine Kraft oder ein Kraft-Drehmoment-Paar einer physikalischen Vermittlung der Mensch-Maschine-Interaktion auf den simulierten massebehafteten Körper anzuwenden.

11. Anordnung nach einem der Patentansprüche 9 oder 10,
**dadurch gekennzeichnet,**
**dass** die industrielle Automatisierungsanordnung ein Gerät mit einer Bildschirmausgabe (PB) umfasst, wobei vorgesehen ist, die Bildschirmausgabe (PB) an die virtuelle Realität (IU) zu übermitteln und in dieser darzustellen.

12. Anordnung nach einem der Patentansprüche 9 bis 11,
**dadurch gekennzeichnet,**
**dass** das Gerät ein simuliertes Bedien- und Beobachtungsgerät (HMI-E) ist, wobei vorgesehen ist, Eingaben aus der virtuellen Realität (IU) und/oder die im sechsten Schritt übertragenen Eingabeparameter für das simulierte Bedien- und Beobachtungsgerät (HMI-E) zu verwenden, und wobei vorgesehen ist, Ausgaben (PB) des simulierten Bedien- und Beobachtungsgerätes an die virtuelle Realität (IU) zu übermitteln und dort mit einem Abbild einer Bedien- und Beobachtungsstation (G) darzustellen.

13. Anordnung nach einem der Patentansprüche 9 bis 12,
**dadurch gekennzeichnet,**
**dass** die Komponente (V-PLC) eine virtuelle speicherprogrammierbare Steuerung (V-PLC) ist, wobei die virtuelle speicherprogrammierbare Steuerung (V-PLC) ein für eine reale Automatisierungsanordnung bestimmtes Automatisierungsprogramm umfasst, und wobei vorgesehen ist, bei der Abarbeitung des Automatisierungsprogramms in der virtuellen speicherprogrammierbaren Steuerung (V-PLC) festgestellte Fehler entdeckt und zur Korrektur des Automatisierungsprogramms zu verwenden und das korrigierte Automatisierungsprogramm in der realen Automatisierungsanordnung einzusetzen.

14. Anordnung nach der Patentanspruch 13,
**dadurch gekennzeichnet,**
**dass** an der virtuellen speicherprogrammierbaren Steuerung (V-PLC) eine Prozess-Simulationseinrichtung für einen industriellen Prozess angeschlossen ist, wobei die virtuelle speicherprogrammierbare Steuerung (V-PLC) zur Steuerung und/oder Kontrolle eines damit simulierten industriellen Prozesses mittels eines bidirektionalen Datenaustauschs mit der Prozess-Simulationseinrichtung eingerichtet ist.

15. Anordnung nach einem der Patentansprüche 9 bis 14,
**dadurch gekennzeichnet,**
**dass** durch die Simulationseinrichtung (STM) dazu eingerichtet ist, die zweiten Parameter (F) oder die simulierte Bewegung (X) betreffende dritte Parameter an die virtuelle Realität (IU) zu übermitteln, wonach vorgesehen ist, dass durch die virtuelle Realität (IU) eine Darstellung des Bedienmittels anhand der übermittelten Parameter angepasst wird.

16. Anordnung nach einem der Patentansprüche 9 bis 15,
**dadurch gekennzeichnet,**
**dass** in der Anordnung eine separate Recheneinrichtung mit einer separaten Hardware und/oder einer separaten Software zur Erzeugung der virtuellen Realität (IU) vorgesehen ist.

## Claims

1. Method for immersive man-machine interaction (NI) with a virtual mechanical operating means of an industrial automation arrangement in a virtual reality (IU),
wherein, through the interaction with the operating means, input information is transmitted to a component (V-PLC) of the industrial automation arrangement,
**characterized**
**in that**, in a first step, the mechanical operating means is modelled in a simulation apparatus (STM) for a rigid-body simulation,
**in that**, in a second step, the mechanical operating means is replicated in the virtual reality (IU),
**in that**, in a third step, an interaction with the represented operating means is detected by the virtual reality (IU), wherein, from first parameters of the detected virtual interaction, second parameters (F) relating to a simulated physical effect on the operating means are calculated,
**in that**, in a fourth step, the second parameters are transmitted to the simulation apparatus (STM),
**in that**, in a fifth step, the second parameters (F) are used by the simulation apparatus (STM) by means of the modelled operating means for simulating a movement (X) of at least a part of the operating means, wherein it is decided whether a switching state change of the operating means is produced by the simulated movement (X), and
**in that**, in a sixth step, the switching state or the switching state change is reported as the input information to the component (V-PLC).

2. Method according to Patent Claim 1,
**characterized in that**,
in the simulation, a simulated mass-comprising body, in particular a lever or a button or a switch or another movable element, is used as the at least one part of the operating means, wherein at least a force or a force-torque pair of a physical mediation of the man-machine interaction is applied as second parameters (F) to the simulated mass-comprising body.

3. Method according to either of the preceding patent claims, **characterized**
**in that** first values for a direction and a penetration of a hand or a finger are determined as the first parameters by the virtual reality (IU) with the replicated operating means and are used to calculate the second parameters (F).

4. Method according to one of the preceding patent claims, **characterized**
**in that** the industrial automation arrangement comprises a device with a display screen output (PB), wherein the display screen output is transmitted to the virtual reality (IU) and is represented therein.

5. Method according to Patent Claim 4,
**characterized**
**in that** the device is a simulated operating and monitoring device (HMI-E), wherein inputs from the virtual reality (IU) and/or the input parameters transmitted in the sixth step are used for the simulated operating and monitoring device (HMI-E), and wherein outputs of the simulated operating and monitoring device (HMI-E) are transmitted to the virtual reality (IU) and are represented there with a replica of an operating and monitoring station (G).

6. Method according to one of the preceding patent claims, **characterized**
**in that** a virtual programmable logic controller (V-PLC) is used as the component (V-PLC), wherein the virtual programmable logic controller (V-PLC) executes an automation program intended for a real automation arrangement, and wherein faults identified in the execution of the automation program in the virtual programmable logic controller (V-PLC) are discovered and are used to correct the automation program, and wherein the changed automation program is used in the real automation arrangement.

7. Method according to Patent Claim 6,
**characterized**
**in that** a process simulation apparatus for an industrial process is connected to the virtual programmable logic controller (V-PLC), wherein, by means of a bidirectional data exchange with the process simulation apparatus, the virtual programmable logic controller (V-PLC) controls and/or monitors an industrial process simulated therewith.

8. Method according to one of the preceding patent claims, **characterized**
**in that** the second parameters (F) or third parameters relating to the simulated movement (X) are transmitted by the simulation apparatus (STM) to the virtual reality (IU), whereafter a representation of the operating means is adapted by the virtual reality on the basis of the transmitted parameters.

9. Arrangement for immersive man-machine interaction (NI) with a virtual mechanical operating means of an industrial automation arrangement in a virtual reality (IU),
wherein the arrangement is configured to transmit input information to a component (V-PLC) of the industrial automation arrangement as a result of the interaction (NI) with the operating means,
with a system for creating and visualizing the virtual reality (IU), and
wherein the mechanical operating means is replicated in the virtual reality (IU),
**characterized**
**in that** a simulation apparatus (STM) for a rigid-body simulation of the mechanical operating means is provided,
**in that** the virtual reality (IU) is configured to detect the interaction (NI) with the represented operating means, wherein provision is made, from first parameters of the detected virtual interaction, to calculate second parameters (F) relating to a simulated physical effect on the operating means, in that the virtual reality (IU) is configured to transmit the second parameters (F) to the simulation apparatus (STM),
**in that** the simulation apparatus (STM) is configured to simulate a movement (X) of at least a part of the operating means by means of the modelled operating means on the basis of the second parameters (F), wherein the simulation apparatus (STM) is designed to decide whether a switching state change of the operating means has been produced by the simulated movement (X), and
**in that** the simulation apparatus (STM) is configured to report the switching state change or the switching state as the input information to the component (V-PLC).

10. Arrangement according to Patent Claim 9,
**characterized in that**,
in the simulation apparatus (STM), the mechanical operating means has a simulated mass-comprising body, in particular a lever or a button or a switch, wherein the simulation apparatus (STM) is configured to apply at least a force or a force-torque pair of a physical mediation of the man-machine interaction as second parameters (F) to the simulated mass-comprising body.

11. Arrangement according to one of Patent Claims 9 and 10, **characterized**
**in that** the industrial automation arrangement comprises a device with a display screen output (PB), wherein provision is made to transmit the display screen output (PB) to the virtual reality (IU) and to represent it therein.

12. Arrangement according to one of Patent Claims 9 to 11, **characterized**
**in that** the device is a simulated operating and monitoring device (HMI-E), wherein provision is made to use inputs from the virtual reality (IU) and/or the input parameters transmitted in the sixth step for the simulated operating and monitoring device (HMI-E), and wherein provision is made to transmit outputs (PB) of the simulated operating and monitoring device to the virtual reality (IU) and to represent them there with a replica of an operating and monitoring station (G).

13. Arrangement according to one of Patent Claims 9 to 12, **characterized**
**in that** the component (V-PLC) is a virtual programmable logic controller (V-PLC), wherein the virtual programmable logic controller (V-PLC) comprises an automation program intended for a real automation arrangement, and wherein provision is made to discover faults identified in the execution of the automation program in the virtual programmable logic controller (V-PLC) and to use them to correct the automation program, and to use the corrected automation program in the real automation arrangement.

14. Arrangement according to Patent Claim 13,
**characterized in that**
a process simulation apparatus for an industrial process is connected to the virtual programmable logic controller (V-PLC), wherein the virtual programmable logic controller (V-PLC) is configured to control and/or monitor an industrial process simulated therewith by means of a bidirectional data exchange with the process simulation apparatus.

15. Arrangement according to one of Patent Claims 9 to 14, **characterized**
**in that** the simulation apparatus (STM) is configured to transmit the second parameters (F) or third parameters relating to the simulated movement (X) to the virtual reality (IU), whereafter provision is made for a representation of the operating means to be adapted by the virtual reality (IU) on the basis of the transmitted parameters.

16. Arrangement according to one of Patent Claims 9 to 15, **characterized**
**in that** a separate computing apparatus having separate hardware and/or separate software is provided in the arrangement in order to create the virtual reality (IU).

## Revendications

1. Procédé d'interaction (NI) d'immersive homme - machine par un moyen mécanique virtuel de service d'un équipement d'automatisation industriel dans une réalité (IU) virtuelle, dans lequel, par l'interaction par le moyen de service, on transmet une information d'entrée à un composant (V-PLC) de l'équipement d'automatisation industriel,
**caractérisé**
**en ce que**, dans un premier stade, on modélise le moyen mécanique de service dans un dispositif (STM) de simulation pour une simulation de corps rigide,
**en ce que**, dans un deuxième stade, on représente le moyen mécanique de service dans la réalité (IU) virtuelle,
**en ce que**, dans un troisième stade, on détecte, par la réalité (IU) virtuelle, une interaction avec le moyen de service représenté, dans lequel, à partir de premiers paramètres de l'interaction virtuelle détectée, on calcule, par un effet physique simulé sur le moyen de service, des deuxièmes paramètres (F),
**en ce que**, dans un quatrième stade, on transmet les deuxièmes paramètres au dispositif (STM) de simulation,
**en ce que**, dans un cinquième stade, par le dispositif (STM) de simulation, on utilise les deuxièmes paramètres (F) au moyen du moyen de service modélisé, pour la simulation d'un mouvement (X) d'au moins une partie du moyen de service, dans lequel on décide s'il y a, par le mouvement (X) simulé, une modification de l'état de commutation du moyen de service, et
**en ce que**, dans un sixième stade, on signale l'état de commutation ou la modification de l'état de commutation comme information d'entrée au composant (V-PLC).

2. Procédé suivant la revendication 1,
**caractérisé en ce que**
l'on utilise dans la simulation, comme au moins une partie du moyen de service, un corps simulé, qui a de la masse, notamment un levier ou une touche ou un interrupteur ou un autre élément mobile, dans lequel on applique au corps simulé ayant de la masse, comme deuxièmes paramètres (F), au moins une force ou une paire force - couple d'une intervention physique de l'interaction homme - machine.

3. Procédé suivant l'une des revendications précédentes, **caractérisé en ce que**
l'on détermine, comme premiers paramètres, des premières valeurs d'une direction et d'une pénétration d'une main ou d'un doigt par le moyen de service reproduit dans la réalité (IU) virtuelle et on les utilise pour le calcul des deuxièmes paramètres (F).

4. Procédé suivant l'une des revendications précédentes, **caractérisé en ce que**
l'équipement d'automatisation industriel comprend un appareil ayant une sortie (PB) d'écran, dans lequel on transmet la sortie d'écran à la réalité (IU) virtuelle et on l'y représente.

5. Procédé suivant la revendication 4,
**caractérisé en ce que**
l'appareil est un appareil (HMI-E) simulé de service et/ou d'observation, dans lequel on utilise, pour l'appareil (HMI-E) simulé de service et/ou d'observation, des entrées de la réalité (IU) virtuelle et/ou les paramètres d'entrée transmis dans le sixième stade, et dans lequel on transmet des sorties de l'appareil (HMI-E) simulé de service et/ou d'observation à la réalité (IU) virtuelle et on les y représente par une représentation d'un poste (G) de service et/ou d'observation.

6. Procédé suivant l'une des revendications précédentes, **caractérisé en ce que**
l'on utilise, comme composant (V-PLC), un automate (V-PLC) virtuel programmable, dans lequel l'automate (V-PLC) virtuel programmable élabore un programme d'automatisation déterminé pour un équipement d'automatisation réel, et dans lequel, lors de l'élaboration du programme d'automatisation, on révèle des défauts constatés dans l'automate (V-PLC) virtuel programmable et on les utilise pour la correction du programme d'automatisation, et dans lequel on utilise le programme d'automatisation modifié dans l'équipement d'automatisation réel.

7. Procédé suivant la revendication 6,
**caractérisé en ce que**
l'on raccorde, à l'automate (V-PLC) virtuel programmable, un dispositif de simulation de processus d'un processus industriel, dans lequel l'automate (V-PLC) virtuel programmable commande et/ou contrôle, au moyen d'un échange de données bidirectionnelle avec le dispositif de simulation de processus, un processus industriel ainsi simulé.

8. Procédé suivant l'une des revendications précédentes, **caractérisé en ce que**
par le dispositif (STM) de simulation, on transmet, à la réalité (IU) virtuelle, les deuxièmes paramètres (F) ou des troisièmes paramètres concernant le mouvement (X) simulé puis, par la réalité virtuelle, on adapte, à l'aide des paramètres transmis, une représentation du moyen de service.

9. Equipement d'une interaction (NI) immersive homme - machine comprenant un moyen virtuel mécanique de service d'un équipement d'automatisation industriel dans une réalité (IU) virtuelle, dans lequel l'équipement est conçu pour la transmission d'une information d'entrée à un composant (V-PLC) de l'équipement d'automatisation industriel, en raison de l'interaction (NI) avec le moyen de service,
comprenant un système de production et de visualisation de la réalité (IU) virtuelle,
dans lequel le moyen mécanique de service est représenté dans la réalité (IU) virtuelle,
**caractérisé**
**en ce qu'**il est prévu un dispositif (STM) de simulation, de simulation d'une simulation d'un corps rigide du moyen mécanique de service,
**en ce que** la réalité (IU) virtuelle est conçue pour la détection de l'interaction (NI) avec le moyen de service représenté, dans lequel il est prévu de calculer, par un effet physique simulé sur le moyen de service, des deuxièmes paramètres (F) à partir de premiers paramètres de l'interaction virtuelle détectée,
**en ce que** la réalité (IU) virtuelle est conçue pour la transmission des deuxièmes paramètres (F) au dispositif (STM) de simulation,
**en ce que** le dispositif (STM) de simulation est conçu pour la simulation d'un mouvement (X) d'au moins une partie des moyens de service au moyen du moyen de service modélisé à l'aide des deuxièmes paramètres (F), le dispositif (STM) de simulation étant conformé pour prendre une décision sur le point de savoir, s'il est donné par le mouvement (X) simulé une modification de l'état de commutation du moyen de service, et
**en ce que** le dispositif (STM) de simulation est conçu pour signaler la modification de l'état de commutation ou l'état de commutation au composant (V-PLC) comme information d'entrée.

10. Equipement suivant la revendication 9,
**caractérisé en ce que**
dans le dispositif (STM) de simulation, le moyen mécanique de service a un corps simulé ayant de la masse, notamment un levier ou une touche ou un interrupteur, dans lequel le dispositif (STM) de simulation est conçu pour appliquer au corps simulé ayant de la masse, comme deuxièmes paramètres (F), au moins une force ou une paire force-couple d'une commutation physique de l'interaction homme - machine.

11. Equipement suivant l'une des revendications 9 ou 10, **caractérisé en ce que**
l'équipement d'automatisation industriel comprend un appareil ayant une sortie (PB) d'écran, dans lequel on transmet la sortie (PB) d'écran à la réalité (IU) virtuelle et on l'y représente.

12. Equipement suivant l'une des revendications 9 à 11, **caractérisé en ce que**
l'appareil est un appareil (HMI-E) simulé de service et d'observation, dans lequel il est prévu d'utiliser des entrées de la réalité (IU) virtuelle et/ou les paramètres d'entrée transmis dans le sixième stade, pour l'appareil (HMI-E) simulé de service et d'observation, et dans lequel il est prévu de transmettre des sorties (PB) de l'appareil simulé de service et d'observation à la réalité (IU) virtuelle et de les y représenter par une représentation d'un poste (G) de service et d'observation.

13. Equipement suivant l'une des revendications 9 à 12, **caractérisé en ce que**
le composant (V-PLC) est un automate (V-PLC) virtuel programmable, dans lequel l'automate (V-PLC) virtuel programmable comprend un programme d'automatisation déterminé pour un équipement d'automatisation réel, et dans lequel il est prévu, lors de l'établissement du programme d'automatisation, dans l'automate (V-PLC) virtuel programmable, de révéler des erreurs constatées et de les utiliser pour la correction du programme d'automatisation et d'insérer le programme d'automatisation corrigé dans l'équipement d'automatisation réel.

14. Equipement suivant la revendication 13,
**caractérisé en ce qu'**
il est raccordé à l'automate (V-PLC) virtuel programmable un dispositif de simulation de processus d'un processus industriel, dans lequel l'automate (V-PLC) virtuel programmable est conçu pour la commande et/ou le contrôle d'un processus industriel ainsi simulé au moyen d'un échange de données bidirectionnel avec le dispositif de simulation de processus.

15. Equipement suivant l'une des revendications 9 à 14, **caractérisé en ce que**
le dispositif (STM) de simulation est conçu pour transmettre les deuxièmes paramètres (F) ou des troisièmes paramètres concernant le mouvement (X) simulé à la réalité (IU) virtuelle, dans lequel il est prévu ensuite que, par la réalité (IU) virtuelle, une représentation du moyen de service soit adaptée à l'aide des paramètres retransmis.

16. Equipement suivant l'une des revendications 9 à 15, **caractérisé en ce que**
dans l'équipement est prévu un dispositif informatique distinct ayant un matériel distinct et/ou un logiciel distinct de production de la réalité (IU) virtuelle.
